# FASCICULE DE BREVET EUROPEEN

(11) **EP 4 375 166 B1**
(45) Date de publication et mention de la délivrance du brevet: **26.11.2025**
(21) Numéro de dépôt: 23205425.4
(22) Date de dépôt: 24.10.2023
(51) Int. Cl.: B62D 21/11, B62D 25/08, B62D 27/06

(54) **TRAIN ARRIÈRE DE VÉHICULE AUTOMOBILE FIXÉ SUR UN SUPPORT EN ÉQUERRE LIÉ À UNE DOUBLURE DU LONGERONNET**
HINTERRADAUFHÄNGUNG EINES KRAFTFAHRZEUGS, DIE AN EINEM WINKELTRÄGER BEFESTIGT IST, DER AN EINER HOLMGURTAUSKLEIDUNG ANGESCHLOSSEN IST
REAR AXLE OF A MOTOR VEHICLE FIXED ON A BRACKET SUPPORT LINKED TO A LINER OF THE BEAM

(30) Priorité: 23.11.2022 FR 2212204
(43) Date de publication de la demande: 29.05.2024
(73) Titulaire: Stellantis Auto SAS, 78300 Poissy (FR)
(72) Inventeur: BERTH, STEPHANE, 92320 CHATILLON (FR); GUILBAUT, MARC, 94140 ALFORTVILLE (FR)
(74) Mandataire: BCIP

(56) Documents cités:
- CN-B- 106 741 183
- DE-A1- 102014 210 844
- US-A1- 2010 072 787

## Description

### Domaine technique

La présente invention concerne le domaine des véhicules automobiles, plus particulièrement le domaine des châssis des véhicules automobiles.

### Technique antérieure

Les véhicules automobiles disposent d'un train arrière généralement fixé à une partie arrière de la caisse, et précisément fixé sur des longerons latéraux arrière, communément désignés par longeronnets. Ces derniers comprennent un environnement habituellement restreint pour recevoir la fixation avec le train arrière. Dans cette configuration, la fixation du train arrière sur les longeronnets doit être suffisamment compacte et rigide pour permettre l'absorption d'éventuels chocs arrière sur le châssis du véhicule automobile.

Le document de brevet publié FR 3 105 153 A1 divulgue une structure de partie arrière de caisse de véhicule automobile comprenant un train arrière fixé au moyen d'organes de fixation présentés, respectivement, au droit des longerons latéraux et au droit des longeronnets disposés transversalement à distance desdits longerons latéraux.

Le document CN 106 741 183 B décrit un profilé selon le préambule de la revendication 1.

Cependant, la solution proposée par le document nécessite l'utilisation de renforts au droit des organes de fixation, à la fois au niveau des longerons latéraux et des longeronnets, afin de rigidifier la fixation. Une telle configuration alourdit et complexifie l'assemblage du train arrière, entraînant un coût associé élevé.

### Exposé de l'invention

La présente invention a pour objectif de pallier au moins un des inconvénients de l'état de la technique susmentionné. Plus particulièrement, l'invention a pour objectif de proposer une solution simple, performante et économique permettant d'assurer une fixation optimale du train arrière sur la structure du véhicule automobile et qui garantit une endurance de la tenue de ladite fixation du train arrière, et cela dans un environnement compact et sans engendrer une augmentation de la masse de l'ensemble.

À cet effet, l'invention a pour objet un véhicule automobile comprenant :
- un châssis comportant une partie arrière avec deux profilés s'étendant longitudinalement et parallèlement l'un à l'autre ;
- un train arrière comprenant un berceau rigidement fixé à chacun des deux profilés, remarquable en ce que chaque fixation du berceau à un des profilés comprend une vis traversant successivement : une paroi inférieure du profilé, une doublure du profilé, une entretoise située dans le profilé, un support en équerre fixé au profilé, et un écrou en appui sur le support en équerre, et situé dans le profilé, ledit écrou étant logé dans une cage fixée au support en équerre, ledit support en équerre étant fixé à la doublure via une patte d'extrémité de la doublure.

Selon un mode de réalisation, le support en équerre comprend une patte arrière fixée contre la patte d'extrémité de la doublure.

Selon un mode de réalisation, la doublure est un embouti s'étendant le long du profilé, avec une section transversale comprenant un bord horizontal fixé contre la paroi inférieure du profilé, un bord vertical fixé contre une paroi latérale du profilé et une marche d'escalier entre lesdits bords horizontal et vertical.

Selon un mode de réalisation, la marche d'escalier présente un profil longitudinal formant une encoche autour de l'entretoise de manière à présenter une longueur réduite et un bord horizontal de la section transversale de la doublure, qui est élargi en face de ladite entretoise.

Avantageusement, la longueur réduite de la marche est présentée entre le bord vertical de la doublure et ladite marche, suivant une direction sensiblement transversale au véhicule automobile.

Selon un mode de réalisation, l'entretoise est disposée directement sur le bord horizontal élargi de la section transversale de la doublure.

Selon un mode de réalisation, la patte d'extrémité de la doublure est formée par une extension longitudinale du bord horizontal élargi de la section transversale de la doublure.

Selon un mode de réalisation, l'extension longitudinale du bord horizontal élargi de la section transversale de la doublure comprend une portion horizontale et une portion verticale pliée par rapport à la portion horizontale et correspondant à la patte d'extrémité de la doublure.

Selon un mode de réalisation, la marche d'escalier est horizontale.

Selon un mode de réalisation, le support en équerre est fixé à une paroi latérale du profilé, opposée à la paroi latérale dudit profilé contre laquelle est fixé le bord vertical de la section transversale de la doublure.

L'invention a également trait à un profilé de section creuse et fermée, pour châssis de véhicule automobile, comprenant un orifice destiné à recevoir une vis de fixation, caractérisé en ce que le profilé comprend successivement : une paroi inférieure du profilé, doublure, une entretoise située dans le profilé, un support en équerre fixé au profilé, et un écrou en appui sur le support en équerre, et situé dans le profilé, ledit écrou étant logé dans une cage fixée au support en équerre, ledit support en équerre étant fixé à la doublure via une patte d'extrémité de la doublure.

La fixation du berceau du train arrière aux profilés du véhicule automobile de l'invention permet d'assurer une fixation optimale, légère et peu encombrante, sans nécessité d'utilisation de renforts, simplifiant ainsi l'assemblage du train arrière et entraînant une réduction des coûts associés. En effet, la fixation de la patte arrière du support en équerre à la patte d'extrémité de la doublure permet d'assurer une bonne endurance de la tenue de la fixation du train arrière sur la structure du véhicule automobile.

### Brève description des dessins

[Fig 1] représente une vue d'en dessous en perspective d'un véhicule automobile selon l'invention ;
[Fig 2] représente une vue en perspective d'un profilé de section creuse d'une partie arrière du châssis du véhicule de la figure 1 ;
[Fig 3] représente une vue en perspective d'un écrou logé dans une cage destinée à être fixée au support en équerre 20 de la figure 2 ;
[Fig 4] représente une vue en perspective de la doublure du profilé de la figure 2.

### Description détaillée

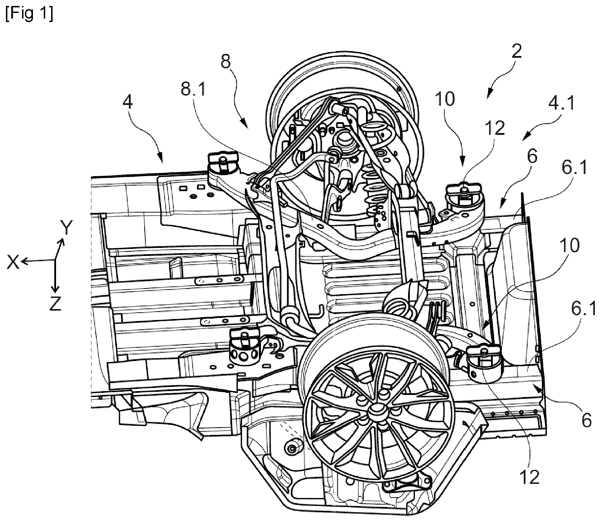

La figure 1 représente une vue d'en dessous en perspective d'un véhicule automobile 2 selon l'invention.

Le véhicule automobile 2 comprend un châssis 4 comportant une partie arrière 4.1 avec deux profilés 6, communément désignés par longeronnets 6, s'étendant longitudinalement et parallèlement l'un à l'autre.

On peut observer un train arrière 8 ayant un berceau 8.1 fixé de manière rigide à chacun des deux profilés 6. Dans cette configuration, le berceau 8.1 comprend préférentiellement deux points de fixation arrière 10 correspondant à un point de fixation arrière droit et à un point fixation arrière gauche.

Chaque profilé 6 comprend une paroi inférieure 6.1 traversée par une vis 12 de fixation 10. A cet égard, la paroi inférieure 6.1 comprend un orifice (non illustré) destiné à recevoir la vis 12.

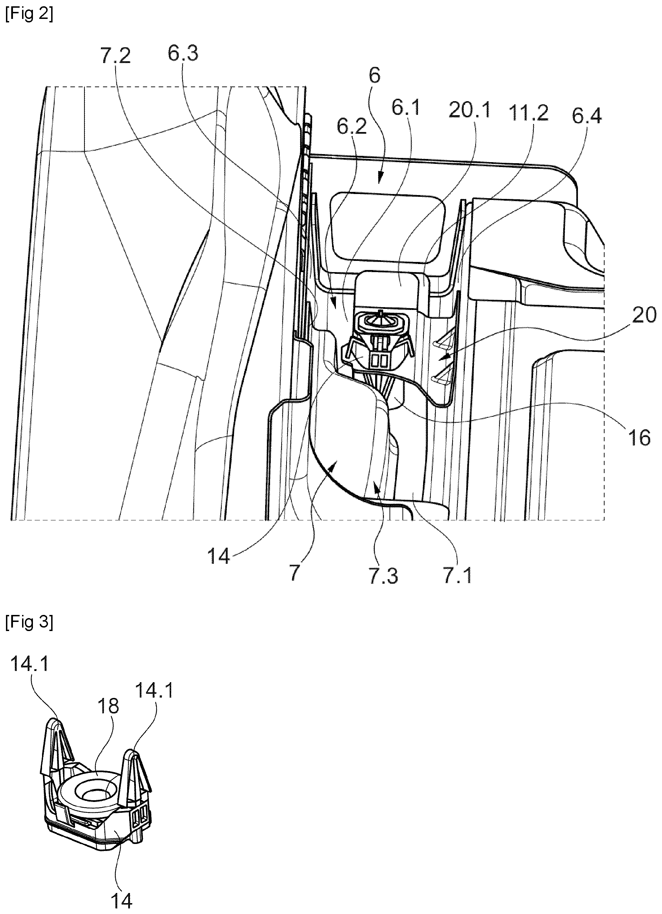

La figure 2 représente une vue en perspective du profilé 6 de la partie arrière 4.1 du châssis 4 du véhicule automobile 2 de la figure 1.

On peut observer une section creuse 6.2 et fermée du profilé 6. Préférentiellement, chacun des deux profilés 6 du véhicule automobile comprennent une section creuse 6.2 en forme de U.

Dans cette configuration, la partie creuse du profilé 6 est délimitée, suivant la direction verticale Z illustrée à la figure 1, par la paroi inférieure 6.1 et par une doublure 7 s'étendant de préférence sur au moins une moitié d'une étendue longitudinale totale du profilé 6.

La doublure 7 est obtenue, de préférence, à partir d'une tôle emboutie s'étendant le long du profilé 6, avec une section transversale comprenant un bord horizontal 7.1 fixé contre la paroi inférieure 6.1 du profilé 6, un bord vertical 7.2 fixé contre une paroi latérale 6.3 du profilé 6. La doublure 7 comprend également une marche d'escalier 7.3 entre les bords horizontal 7.1 et vertical 7.2.

Avantageusement, la fixation 10 du berceau 8.1 de la figure 1 au profilé 6 est assurée au moyen de la vis 12 qui traverse successivement : la paroi inférieure 6.1, la doublure 7, une entretoise 16 située au niveau de la section creuse 6.2 du profilé 6, ladite entretoise 16 étant disposée entre la doublure 7 et un support en équerre 20 fixé à une paroi latérale 6.4 du profilé 6 qui opposée à la paroi latérale 6.3 contre laquelle est fixé le bord vertical 7.2 de la doublure 7.

Préférentiellement, l'entretoise 16 est une pièce cylindrique creuse intégralement traversée par la vis de fixation 12. Cette dernière traverse, en outre, un écrou 18 en appui sur le support en équerre 20, en étant logé dans une cage 14 à écrou fixée au support en équerre 20.

La figure 3 représente une vue en perspective de l'écrou 18 logé dans la cage 14 destinée à être fixée au support en équerre 20 de la figure 2.

La cage 14 est de préférence une pièce en plastique permettant de maintenir l'écrou 18 sur le support en équerre.

A cet égard, la cage 14 comprend avantageusement deux clips 14.1 ayant une forme en V destinés à traverser le support en équerre de manière à assurer une retenue efficace de l'écrou 18. Les clips 14.1 s'étendent verticalement vers le bord horizontal de la doublure permettent, en outre, de maintenir en position et de limiter les déplacements de l'entretoise 16 dans la partie creuse 6.2 préalablement à la fixation de l'ensemble au moyen de la vis. Dans cette configuration, la vis de la fixation 10 de la figure 1 traverse intégralement et de manière verticale l'entretoise 16, l'écrou 18 et la cage 14.

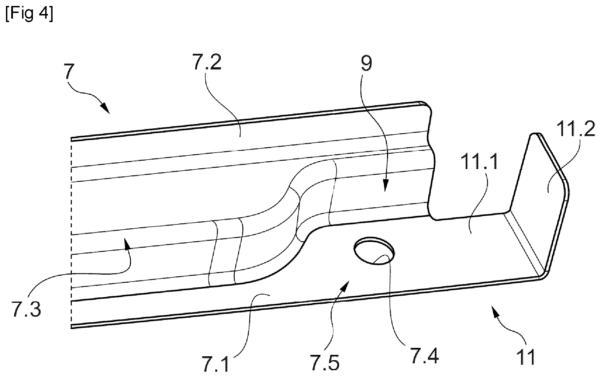

La figure 4 représente une vue en perspective de la doublure 7 du profilé. On peut voir que la marche d'escalier 7.3 présente un profil longitudinal formant une encoche 9 autour d'un trou 7.4 destinée à être traversé par la vis de fixation.

A cet effet, la marche d'escalier 7.3 présente, au niveau de l'encoche 9, une longueur réduite entre ladite marche 7.3 et le bord vertical 7.2, ainsi qu'un bord horizontal 7.5 de la section transversale de la doublure 7 qui est élargi en face du trou 7.4.

Le bord horizontal élargi 7.5 comprend une extension longitudinale 11 s'étendant vers l'arrière, cette dernière comprend une portion horizontale 11.1 et une portion verticale pliée 11.2 préférentiellement de manière perpendiculaire par rapport à ladite portion horizontale 11.1. Dans cette configuration, la portion verticale pliée 11.2 correspond à une patte d'extrémité 11.2 de la doublure 7.

Préférentiellement, la doublure 7 est dépourvue de marche d'escalier 7.3 au niveau de l'extension longitudinale 11.

En référence aux figures 2 à 4, on peut voir que l'entretoise 16 est disposée directement sur le bord horizontal élargi 7.5 de la section transversale de la doublure 7 au droit de l'encoche 9 formée par le profil de la marche d'escalier 7.3 autour de ladite entretoise 16.

En plus d'être fixé à la paroi latérale 6.4 du profilé 6, le support en équerre 20 est fixé à la doublure 7, et précisément fixé à la patte d'extrémité 11.2 de la doublure 7.

A cet égard, le support en équerre 20 comprend une patte arrière 20.1 qui est pliée préférentiellement à 90° par rapport à l'étendue principalement longitudinal dudit support 20.

La patte arrière 20.1 est fixée contre la patte d'extrémité 11.2 de la doublure 7. La fixation est de préférence assurée par soudure, et plus préférentiellement assurée par deux points de soudure.

De manière avantageuse, la fixation du support en équerre 20 à la doublure 7 du profilé 6, permet d'assurer une bonne endurance du maintien de la fixation du train arrière sur la structure du véhicule automobile. En effet, la liaison rigide des pattes de chacun des support en équerre et de la doublure permet d'améliorer la résistance de l'ensemble contre les efforts axiaux et radiaux.

Avantageusement, la doublure 7 dépourvue de marche d'escalier 7.3 au niveau de l'extension longitudinale 11 permet de donner plus de souplesse à l'extension afin de favoriser davantage sa déformation élastique en flexion, notamment lors du serrage de la vis 12 de manière à garantir un maintien correct de l'entretoise 16 dans la partie creuse 6.2 du profilé 6.

Le profilé 6 de l'invention permet de fixer le berceau du train arrière sur le véhicule automobile de manière efficace avec un appui ferme de l'écrou sur le support en équerre garantissant une bonne endurance de la fixation, et cela sans nécessité de rajout de pièces de renfort supplémentaires, garantissant ainsi une légèreté à l'assemblage du véhicule automobile.

## Revendications

1. Profilé (6) de section creuse et fermée (6.2), pour châssis (4) de véhicule automobile (2), comprenant un orifice destiné à recevoir une vis (12) de fixation, **caractérisé en ce que** le profilé (6) comprend successivement : une paroi inférieure (6.1) du profilé (6), une doublure (7) du profilé (6), une entretoise (16) située dans le profilé (6), un support en équerre (20) fixé au profilé (6), et un écrou (18) en appui sur le support en équerre (20), et situé dans le profilé (6), ledit écrou (18) étant logé dans une cage (14) fixée au support en équerre (20), ledit support en équerre (20) étant fixé à la doublure (7) via une patte d'extrémité de la doublure (7).

2. Véhicule automobile (2) comprenant :
- un châssis (4) comportant une partie arrière (4.1) avec deux profilés (6) s'étendant longitudinalement et parallèlement l'un à l'autre
- un train arrière (8) comprenant un berceau (8.1) rigidement fixé à chacun des deux profilés (6),
**caractérisé en ce que**
chaque fixation (10) du berceau (8.1) à un des profilés (6) comprend une vis (12) traversant successivement : une paroi inférieure (6.1) du profilé (6), une doublure (7) du profilé (6), une entretoise (16) située dans le profilé (6), un support en équerre (20) fixé au profilé (6), et un écrou (18) en appui sur le support en équerre (20), et situé dans le profilé (6), ledit écrou (18) étant logé dans une cage (14) fixée au support en équerre (20), ledit support en équerre (20) étant fixé à la doublure (7) via une patte d'extrémité (11.2) de la doublure (7).

3. Véhicule automobile (2) selon la revendication 2, dans lequel le support en équerre (20) comprend une patte arrière (20.1) fixée contre la patte d'extrémité (11.2) de la doublure (7).

4. Véhicule automobile (2) selon l'une des revendication 2 ou 3, dans lequel la doublure (7) est un embouti (7) s'étendant le long du profilé (6), avec une section transversale comprenant un bord horizontal (7.1) fixé contre la paroi inférieure (6.1) du profilé (6), un bord vertical (7.2) fixé contre une paroi latérale (6.3) du profilé (6) et une marche d'escalier (7.3) entre lesdits bords horizontal (7.1) et vertical (7.2).

5. Véhicule automobile (2) selon la revendication 4, dans lequel la marche d'escalier (7.3) présente un profil longitudinal formant une encoche (9) autour de l'entretoise (16) de manière à présenter une longueur réduite et un bord horizontal (7.5) de la section transversale de la doublure (7), qui est élargi en face de ladite entretoise (16).

6. Véhicule automobile (2) selon la revendication 5, dans lequel l'entretoise (16) est disposée directement sur le bord horizontal élargi (7.5) de la section transversale de la doublure (7).

7. Véhicule automobile (2) selon la revendication 6, dans lequel la patte d'extrémité (11.2) de la doublure (7) est formée par une extension longitudinale (11) du bord horizontal élargi (7.5) de la section transversale de la doublure (7).

8. Véhicule automobile (2) selon la revendication 7, dans lequel l'extension longitudinale (11) du bord horizontal élargi (7.5) de la section transversale de la doublure (7) comprend une portion horizontale (11.1) et une portion verticale (11.2) pliée par rapport à la portion horizontale (11.1) et correspondant à la patte d'extrémité (11.2) de la doublure (7)

9. Véhicule automobile (2) selon l'une des revendications 4 à 8, dans lequel la marche d'escalier (7.3) est horizontale.

10. Véhicule automobile (2) selon l'une des revendications 4 à 9, dans lequel le support en équerre (20) est fixé à une paroi latérale (6.4) du profilé (6), opposée à la paroi latérale (6.3) dudit profilé (6) contre laquelle est fixé le bord vertical (7.2) de la section transversale de la doublure (7).

## Patentansprüche

1. Profil (6) mit hohlem und geschlossenem Querschnitt (6.2) für einen Rahmen (4) eines Kraftfahrzeugs (2), das eine Öffnung zur Aufnahme einer Befestigungsschraube (12) aufweist, **dadurch gekennzeichnet, dass** das Profil (6) nacheinander aufweist: eine untere Wand (6.1) des Profils (6), eine Auskleidung (7) des Profils (6), eine in dem Profil (6) befindliche Strebe (16), eine an dem Profil (6) befestigte Winkelstütze (20) und eine Mutter (18), die auf der Winkelstütze (20) aufliegt und sich in dieser befindet Das Profil (6), wobei die Mutter (18) in einem Käfig (14) untergebracht ist, der an der Winkelstütze (20) befestigt ist, wobei die Winkelstütze (20) an der Futter (7) über eine Endlasche des Futters (7).

2. Kraftfahrzeug (2) mit:
- einem Rahmen (4) mit einem hinteren Teil (4.1) mit zwei sich in Längsrichtung und parallel zueinander erstreckenden Profilen (6);
- einem Hinterradzug (8) mit einem an jedem fest befestigten Gestell (8.1) der beiden Profile (6), **dadurch gekennzeichnet, dass** jede Befestigung (10) des Gestells (8.1) an einem der Profile (6) eine Schraube umfasst
(12) nacheinander durchlaufen: eine untere Wand (6.1) des Profils (6), eine Auskleidung (7) des Profils (6), ein Abstandshalter (16) im Profil (6), eine Winkelhalter (20), der an dem Profil (6) befestigt ist, und eine Mutter (18), die an dem Winkelhalter (20) anliegt und in dem Profil (6) angeordnet ist, wobei die Mutter (18) in einem Käfig (14) untergebracht ist, der an dem Winkelhalter (20) befestigt ist, wobei der Winkelhalter (20) an der Auskleidung (7) über eine Endlasche (11.2) der Auskleidung (7) befestigt ist.

3. Kraftfahrzeug (2) nach Anspruch 2, wobei die Winkelstütze (20) eine hintere Lasche (20.1) aufweist, die an der Endlasche (11.2) des Futters (7) befestigt ist.

4. Kraftfahrzeug (2) nach einem der Ansprüche 2 oder 3, bei dem das Futter (7) ein längs des Profils (6) verlaufendes Prägestempel (7) mit einem Querschnitt ist, der einen horizontalen Rand (7.1), der an der unteren Wand (6.1) des Profils (6) befestigt ist, einen vertikalen Rand (7.2), der an einer Seitenwand (6.3) des Profils (6) befestigt ist, und eine Treppenstufe (7.3) zwischen dem horizontalen Rand (7.1) und dem vertikalen Rand (7.2) umfasst.

5. Kraftfahrzeug (2) nach Anspruch 4, wobei die Treppenstufe (7.3) ein Längsprofil aufweist, das eine Kerbe (9) um die Strebe (16) herum bildet, um eine Länge zu haben Reduziert und ein horizontaler Rand (7.5) des Querschnitts der Auskleidung (7), der gegenüber der Strebe (16) verbreitert ist.

6. Kraftfahrzeug (2) nach Anspruch 5, bei dem der Abstandshalter (16) direkt an der verbreiterten horizontalen Kante (7.5) des Querschnitts des Futters (7) angeordnet ist.

7. Kraftfahrzeug (2) nach Anspruch 6, bei dem die Endlasche (11.2) des Futters (7) durch eine Längserstreckung (11) des verbreiterten horizontalen Randes (7.5) des Querschnitts des Futters (7) gebildet ist.

8. Kraftfahrzeug (2) nach Anspruch 7 in
Die Längserstreckung (11) des verbreiterten horizontalen Randes (7.5) des Querschnitts der Auskleidung (7) umfasst einen horizontalen Abschnitt (11.1) und einen vertikalen Abschnitt (11.2), der gegenüber dem horizontalen Abschnitt (11.1) gebogen ist und der Endlasche (11.2) der Auskleidung (7) entspricht.

9. Kraftfahrzeug (2) nach einem der Ansprüche 4, bei dem die Treppenstufe (7.3) horizontal ist.

10. Kraftfahrzeug (2) nach einem der Ansprüche 4 bis 8, bei dem der Winkelträger (20) an einer Seitenwand (6.4) des Profils (6) befestigt ist, die der Seitenwand (6.3) des Profils (6) gegenüberliegt, an der der vertikale Rand (7.2) des Querschnitts des Futters (7) befestigt ist.

## Claims

1. A section (6) of hollow and closed section (6.2) for a chassis (4) of a motor vehicle (2), comprising an orifice intended for a fastening screw (12), **characterised in that** the section (6) successively comprises: a lower wall (6.1) of the section (6), a lining (7) of the section (6), a spacer (16) located in the section (6), a bracket (20) fixed to the section (6), and a nut (18) resting on the bracket (20), and located in the section profiled member (6), said nut (18) being housed in a cage (14) fixed to the bracket support (20), said bracket support (20) being fixed to the lining (7) via an end tab of the lining (7).

2. Motor vehicle (2) comprising:
- a frame (4) comprising a rear part (4.1) with two profiles (6) extending longitudinally and parallel to each other;
- a rear gear (8) comprising a cradle (8.1) rigidly fixed to each
of the two profiles (6), **characterised in that** each fastening (10) of the cradle (8.1) to one of the profiles (6) comprises a screw
(12) passing successively through: a lower wall (6.1) of the section (6), a lining (7) of the profile (6), a spacer (16) located in the profile (6),
square support (20) fixed to the section (6), and a nut (18) resting on the square support (20) and located in the section (6), said nut (18) being housed in a cage (14) fixed to the square support (20), said square support (20) being fixed to the lining (7) via an end lug (11.2) of the lining (7).

3. A motor vehicle (2) according to claim 2, in which the bracket (20) comprises a rear lug (20.1) fixed against the end lug (11.2) of the lining (7).

4. Motor vehicle (2) according to either of Claims 2 and 3, in which the lining (7) is a stamped portion (7) extending along the section (6), with a cross-section comprising a horizontal edge (7.1) fixed against the lower wall (6.1) of the section (6), a vertical edge (7.2) fixed against a side wall (6.3) of the section (6) and a step (7.3) between the said horizontal (7.1) and vertical (7.2) edges.

5. Motor vehicle (2) according to claim 4, wherein the stairway (7.3) has a longitudinal profile forming a notch (9) around the spacer (16) so as to have a length reduced and a horizontal edge (7. 5) of the cross section of the lining (7), which is widened opposite said spacer (16).

6. Motor vehicle (2) according to claim 5, in which the spacer (16) is disposed directly on the enlarged horizontal edge (7.5) of the cross section of the lining (7).

7. Motor vehicle (2) according to claim 6, wherein the end lug (11.2) of the lining (7) is formed by a longitudinal extension (11) of the widened horizontal edge (7.5) of the cross section of the lining (7).

8. Motor vehicle (2) according to claim 7, in which
the longitudinal extension (11) of the enlarged horizontal edge (7.5) of the cross section of the lining (7) comprises a horizontal portion (11.1) and a vertical portion (11.2) folded by report to the horizontal portion (11.1) and corresponding to the end tab (11.2) of the lining (7).

9. Motor vehicle (2) according to one of Claims 4, in which the step (7.3) is horizontal.

10. Motor vehicle (2) according to one of Claims 4 to 8, in which the right-angled support (20) is fixed to a side wall (6.4) of the profile (6), opposite the side wall (6.3) of the said profile (6), against which the vertical edge (7.2) of the cross-section of the lining (7) is fixed.
